(19) Europäisches Patentamt
European Patent Office
Office européen des brevets

(11) Publication number: 0 103 035 A1

# (12) EUROPEAN PATENT APPLICATION

(21) Application number: 82108327.6

(22) Date of filing: 09.09.82

(51) Int. Cl.³: C 01 D 15/00, C 01 F 7/00, B 01 J 41/08

(43) Date of publication of application: 21.03.84 Bulletin 84/12

(84) Designated Contracting States: BE DE FR GB IT NL

(71) Applicant: THE DOW CHEMICAL COMPANY, Dow Center 2030 Abbott Road Post Office Box 1967, Midland Michigan 48640 (US)

(72) Inventor: Bauman, William Carrel, 440 Hwy, 332 No. 12, Lake Jackson Texas (US)
Inventor: Lee, John Malcolm, 123 Aster Lane, Lake Jackson Texas (US)
Inventor: Burba, John Leslie III, 817 Magnolia, Lake Jackson Texas (US)

(74) Representative: Casalonga, Axel et al, BUREAU D.A. CASALONGA OFFICE JOSSE & PETIT Baaderstrasse 12-14, D-8000 München 5 (DE)

## (54) A process for growing crystalline hydrous alumina within the pores of a porous substrate.

(57) Porous substrates containing seeds of hydrous crystalline alumina are contacted with an aqueous solution of alkaline aluminate, thereby causing additional crystalline hydrous alumina to grow on the seeds within the pores of the substrate. Preferable substrates are macroporous ion-exchange resins.

EP 0 103 035 A1

A PROCESS FOR GROWING CRYSTALLINE HYDROUS ALUMINA WITHIN THE PORES OF A POROUS SUBSTRATE.

It is known, e.g., from U.S. Patents 4,116,858 (Lee and Bauman, September 26, 1978) and 4,154,311 (Lee and Bauman, June 26, 1979) that an ion-exchange resin may be saturated with aqueous $AlCl_3$ solution and that reaction with $NH_4OH$ converts the $AlCl_3$ *in situ* to $Al(OH)_3$. This so-formed amorphous $Al(OH)_3$ is then reacted with LiX, where X is halide, at elevated temperature to form crystalline $LiX \cdot 2Al(OH)_3$ which is useful in selectively recovering $Li^+$ values from aqueous solutions, e.g., Li-containing brines.

It is also known, e.g., from U.S. Patents 4,116,856 (Lee and Bauman, September 26, 1978) and 4,221,767 (Lee and Bauman, September 9, 1980) that improvments in the above discussed formation of crystalline $LiX \cdot 2Al(OH)_3$ are found by reacting amorphous $Al(OH)_3$ or crystalline hydrous alumina (e.g., nordstrandite, bayerite, gibbsite or mixtures of these) with LiOH to form $LiOH \cdot 2Al(OH)_3$ which is then reacted with LiX to form the crystalline $LiX \cdot 2Al(OH)_3$, where X is halide.

Various forms of alumina, $Al_2O_3$, are known, some of which occur as natural minerals, some of which are hydrated and some of which are crystalline. The Handbook of Chemistry shows the following:

| Name | Crystalline Form | M.P.°C |
|---|---|---|
| aluminum oxide, $Al_2O_3$ | hex. col. | 2050 |
| $\alpha$-$Al_2O_3$, corundum | trig;col.cr,n | 2015 |
| $\gamma$-$Al_2O_3$, $\Upsilon$-alumina | wh.micro.cr.,n | tr.to alpha |
| $Al_2O_3 \cdot 3H_2O$, gibbsite, (hydrargillite) | monocl.,wh.cr. | tr.to $Al_2O_3 \cdot H_2O$ (Boehmite) |
| $Al_2O_3 \cdot 3H_2O$, bayerite | wh.micro.cr. | tr.to $Al_2O_3 \cdot H_2O$ (Boehmite) |
| aluminum oxide, $Al_2O_3 \cdot xH_2O$ | amor.wh.pwd. | $-xH_2O$,tr.to $\gamma$-$Al_2O_3$ |

Nordstrandite is a crystalline hydrous alumina, as are gibbsite and bayerite.

The present process differs from the above previous lithium aluminate preparations in that $AlCl_3$ is used only once, to provide amorphous $Al(OH)_3$ in a substrate such as a macroporous ion-exchange resin. Further loading of Al into the substrate pores is accomplished by crystallizing the alumina in the pores and growing the crystals in an alkaline aluminate solution.

The present invention is a process for growing crystalline hydrous alumina within the pores of a porous substrate, characterized by providing a seed of crystalline hydrous alumina in said pores by the *in situ* precipitation of a water-soluble aluminum compound, thereby forming amorphous hydrous alumina; converting the so-formed amorphous hydrous alumina to crystalline hydrous alumina by heating; and adding to the seed-bearing substrate an aqueous solution of an alkaline aluminate, thereby providing aluminum oxide values which grow additional quantities of crystalline hydrous alumina on the crystalline hydrous alumina seeds.

The so-formed crystalline hydrous alumina may then be converted to $LiX \cdot 2Al(OH)_3 \cdot nH_2O$ by reaction with a lithium salt, where X is an anion or negative valence salt radical. Depending on the type of crystalline hydrous alumina formed, the crystalline unit cells may be of the 2-layer or 3-layer variety.

As used herein, the expressions "2-layer" and "3-layer" refer to the number of layers bounded on both sides by the aluminate layers into which the subject Li compounds are intercalated. The following graphic illustrations will aid in describing the 2-layer and 3-layer systems:

2-layer
3-layer
nAl(OH)3
Li salt
nAl(OH)3
Li salt
nAl(OH)3
Li salt
Co

It will be realized that the crystals of lithium aluminates are normally present as aggregates or stacks of a plurality of unit cells rather than each unit cell standing as a separate physical entity.

2-Layer $LiX \cdot 2Al(OH)_3 \cdot nH_2O$ is formed from gibbsite and a lithium salt (LiX) other than LiOH. The lithium salt concentration must be high (at least about 12-15 percent of LiCl, for example) and the temperature must be high, preferably close to the boiling point of the LiX solution. LiOH tends to solubilize the gibbsite and when it reprecipitates it forms 3-layer unit cells.

3-Layer $LiX \cdot 2Al(OH)_3 \cdot nH_2O$ is formed from hydrous alumina and LiOH which forms crystalline $LiOH \cdot 2Al(OH)_3 \cdot nH_2O$, which can then be neutralized with an acid to form crystalline $LiX \cdot 2Al(OH)_3 \cdot nH_2O$, where X is the anion of the acid or of the lithium salt.

The porous substrate into which the crystalline hydrous alumina is loaded may be an inert material, such as an inorganic or organic material. For certain uses and reasons, the substrate is preferably a macroporous resin such as an ion-exchange resin as taught in U.S. Patents 4,116,858 and 4,116,856, both previously identified. Examples of the macroporous resins that can be employed are the strong acid and weak base types of macroporous resins.

Once the substrate is loaded to satisfaction with the crystalline hydrous alumina, the composite is then ready for reaction with LiX, where X is a monovalent anion, such as $OH^-$, $Cl^-$, $Br^-$, $I^-$, $RCOO^-$ or $OCl^-$, or

may be divalent or trivalent, such as $SO_4^{--}$, $PO_4^{---}$ or $R(COO)_2^{--}$.

The alkaline aluminate solution, e.g. $NaAlO_2 \cdot xNaOH$, where x is a numerical value of 0.1 to 0.5 may be prepared, e.g., by dissolving commercial grade sodium aluminate, $NaAlO_2$, in water or may be prepared, e.g., by reacting $Al(OH)_3$ with concentrated NaOH. Commercially available solutions of sodium aluminate can be used. When reacting crystalline $Al(OH)_3$ with concentrated NaOH it is preferred that the NaOH be of 50 percent concentration or higher, at a temperature at which the NaOH is a liquid. After the $NaAlO_2 \cdot xNaOH$ is prepared, it is diluted during its use in the present invention. When preparing the aluminate solution, it is also preferred that there be about 1.0 to 1.5 mole of NaOH per mole of $Al(OH)_3$, since too much caustic tends to solubilize the crystalline hydrous alumina seed which is provided in the porous substrate to serve as precipitation sites for additional growth of crystalline hydrous alumina. The alkaline material may be KOH, but it is more costly.

In preparing a porous substrate having "seeds" of crystalline $Al(OH)_3$ within the small pores, it is not generally possible or practical to insert appreciable amounts of non-soluble crystals into the pores. Therefore, the seeds are best implanted by providing aluminum solution in the pores and then precipitating hydrous alumina <u>in situ</u> within the pores. To accomplish this one may use a soluble Al salt, e.g., $AlCl_3$, and then alkalize the Al to insoluble $Al(OH)_3$. This freshly formed $Al(OH)_3$, being amorphous, is then treated in one of various ways to cause the $Al(OH)_3$ to crystallize.

When the substrate is a weak base anion--exchange resin in its basic form, the preferred procedure for incorporating $Al(OH)_3$ seeds therein is to add an aqueous solution of $AlCl_3$ to where the amount of $Cl^-$ is about equivalent to the base capacity. After about 1 hour at room temperature (or somewhat shorter times if the mixture is warmed to not more than about 60°C), most, if not all, of the Al values have been converted to $Al(OH)_3$. This is followed by washing out excess $AlCl_3$, titrating to the resin-OH capacity with NaOH and washing again to substantially remove remaining chlorides.

When the substrate is any other porous structure (other exchange resins, polymers or inorganic inert materials), it is recommended that the seeds be implanted within the pores by using soluble Al (such as $AlCl_3$) which is precipitated _in situ_ using $NH_4OH$ to form $Al(OH)_3$ in the pores. Excess $AlCl_3$, or $Al(OH)_3$ formed outside the pores, is easily washed away.

Once the seed of $Al(OH)_3$ is implanted in the pores of the substrate it may be conveniently crystallized as nordstrandite, bayerite or gibbsite, e.g., as follows:

1. To obtain nordstrandite use a soluble amine, e.g., ethylenediamine (about 20 percent concentration) at about 50°C overnight, then wash out the amine.

2. To obtain bayerite use $NH_3$ (about 1-30 percent in $H_2O$) at reflux temperature for 1-16 hours or more, then wash out excess $NH_4OH$.

3. To obtain gibbsite use aqueous NaOH in an amount of about 0.1-0.5 mole of NaOH per mole of $Al(OH)_3$, boil for about 0.5 hour or more, and wash with $H_2O$. Sodium aluminate may be used instead of the NaOH.

Any of the above-described seeds of crystalline $Al(OH)_3$ may be used as growth sites for producing additional crystalline $Al(OH)_3$ by treatment with alkaline aluminate solution. If this additional treatment is done at less than about 50°C, the newly-precipitated crystalline $Al(OH)_3$ is principally nordstrandite and/or bayerite; if done at greater than about 50°C it is principally gibbsite. There is a tendency for the seed crystal to promote formation of additional $Al(OH)_3$ having the same crystal structure as the seed.

The $NaAlO_2 \cdot xNaOH$, once formed, and having a $NaOH/Al(OH)_3$ ratio generally in the range of about 1.0--1.5, is then preferably used as a diluted aqueous solution of about 5-30 percent concentration by weight as the precursor for the additional $Al(OH)_3$ growth on the seed. The $NaAlO_2 \cdot xNaOH$ solution is mixed with the seed--containing porous substrate. As the aluminum oxide in the sodium aluminate becomes crystallized to $Al(OH)_3$, the pH increases. Addition of more amorphous aluminum hydroxide lowers the pH by reforming additional sodium aluminate and solubilizes the amorphous alumina which then crystallizes out of the sodium aluminate and produces further growth of the seeded crystalline $Al(OH)_3$ which is, again, indicated by a rise in the pH. The step of adding $NaAlO_2 \cdot xNaOH$, or of adding amorphous alumina to reform $NaAlO_2 \cdot xNaOH$, may be repeated one or more times until the relative speed of pH change is slowed, indicating that the pores are substantially filled with crystalline $Al(OH)_3$ and any additional formation of crystalline $Al(OH)_3$ is likely to take place outside the pores. If additional pre-formed $NaAlO_2 \cdot xNaOH$ is added as a source of additional crystalline $Al(OH)_3$, it should be preceded by an amount of acid (preferably HCl) to neutralize the caustic already present from a previous addition of sodium aluminate. This prevents the caustic from building to a concentration which would resolubilize the desired crystalline $Al(OH)_3$.

Another technique for causing additional precipitation of hydrous alumina onto the seed, is to add the alkaline aluminate in an amount sufficient to supply all, or even an excess, of the aluminate values expected to be precipitated. Then by slow or incremental addition of an acid, e.g., HCl, the alkaline metal is converted to alkali metal salt (e.g., NaCl), thus decreasing the ratio of alkali metal hydroxide in the alkaline aluminate, thereby causing precipitation of the aluminate and causing the seed to add to this additional aluminate.

It can be seen, then, that by reacting amorphous aluminum hydroxide to form sodium aluminate, the amorphous aluminum hydroxide is solubilized. The solubilized amorphous aluminum hydroxide, in the presence of the crystalline $Al(OH)_3$ seed, precipitates out as crystalline $Al(OH)_3$ and the seed increases in size.

The reaction of LiX (i.e., a lithium salt or lithium compound) with the crystalline hydrous alumina is performed using an aqueous solution of the LiX and employing, preferably, an elevated temperature. It is best if the LiX is a concentrated solution and the temperature is at or near the boiling point. Weak solutions of LiX and/or lower temperatures of reaction are less effective in obtaining a high degree of the desired intercalation in a reasonable length of time.

The term "intercalation" is used to indicate that the reaction of the LiX with the crystalline hydrous alumina hydroxide creates $LiX \cdot 2Al(OH)_3 \cdot nH_2O$ crystals wherein the LiX moiety lies between layers of the hydrous alumina hydroxide and causes an expansion of the hydrous alumina crystal lattice. The LiX can be substantially leached out, but so long as a significant percentage of it remains, e.g., about 50 percent of the possible amount, the crystal lattice remains expanded and the amount of intercalated LiX can be replenished until the lattice is again loaded with LiX.

The advantages of the present method and of using $NaAlO_2 \cdot xNaOH$ as the source of hydrous alumina to build crystalline $Al(OH)_3$ in the substrate are:

1. crystalline $Al(OH)_3$ (such as gibbsite, bayerite, nordstrandite and mixtures of these) can, by being combined with NaOH, be used and the substrate substantially loaded with the crystalline material, using fewer steps than are shown in U.S. Patents 4,116,856 and 4,116,858 (both previously identified);

2. because it is not necessary to dry the substrate (such as an ion-exchange resin) after the first loading step, osmotic shock is substantially decreased and substrate breakage or decrepitation is substantially avoided;

3. because the composite is neutralized only once, aluminum loss due to neutralization problems is minimized;

4. one may selectively prepare 2-layer lithium aluminates or 3-layer lithium aluminates; and

5. having the hydrous alumina present in the porous substrate as crystalline $Al(OH)_3$ rather than amorphous $Al(OH)_3$ is beneficial in providing optimum loading of LiX, thereby forming crystalline $LiX \cdot 2Al(OH)_3 \cdot nH_2O$ in a more consistent and expeditious manner.

Example 1

(a) Lithium Aluminate from Gibbsite

A macroporous strong acid ion-exchange resin (525 ml) containing 10 percent divinylbenzene is stirred into an equal volume of 29 percent aqueous $AlCl_3$ solution. The resin is filtered so that the excess $AlCl_3$ solution is removed from the resin. The resin is dried to free--flowing resin with dry $N_2$ and then stirred into 600 ml of aqueous 30 percent $NH_3$ solution. The mixture is washed. The resin is contacted with an excess of brine to convert $RSO_3NH_4$ to $RSO_3Na$ and then filtered to remove all of the solution from the beads. The resin is then added to 456 g of $H_2O$ and 230 g of $NaAlO_2 \cdot \frac{1}{2}NaOH$ solution

(from gibbsite and 50 percent NaOH). The mixture is stirred and heated to 75°C-80°C for one hour. The temperature is reduced to 70°C and five 25-g additions of amorphous $Al(OH)_3$ are added at 10-minute intervals. After the last addition, the heat and stirrer are turned off and the resin mixture is allowed to set overnight. The final aluminum content of the washed resin is approximately 3.92 mmoles of Al/ml of resin. X-ray diffraction analysis shows very crystalline gibbsite is present in the resin.

(b) Conversion to 2-Layer Lithium Aluminate

The resin is refluxed in 30 percent aqueous LiCl solution for at least 4 hours. The resin now contains 2-layer $LiCl \cdot 2Al(OH)_3 \cdot nH_2O$.

(c) Preparation of 3-Layer $LiCl \cdot 2Al(OH)_3 \cdot nH_2O$ in a porous substrate via gibbsite

The same resin employed in (a) (110 ml) and containing gibbsite, prepared as described above, is heated with 110 ml of an aqueous solution containing 8.31 g of LiCl and 3.52 g of $LiOH \cdot H_2O$. The resulting slurry is stirred at a temperature of 75°C. 1N NaOH (75 ml) are added and the resin is heated for another hour. The resin is placed in a 95°C oven for 12 hours. X-ray analyses of samples taken periodically show a decrease in the amount of gibbsite with a corresponding increase in the amount of $LiCl \cdot 2Al(OH)_3 \cdot nH_2O$.

The resin is then washed and neutralized with HCl in a solution containing $NH_4Cl$ and LiCl. Neutralization to a pH of 5.6 (at room temperature) requires about 220 milliequivalents of HCl. The LiCl·LiOH·gibbsite reaction will also take place at 25°C.

(d)

The same resin employed in (a) and (c) above (225 ml) and containing gibbsite (3.7 mmoles of Al/ml of resin) is placed in a stainless steel beaker with 275 ml of $H_2O$ and 35 g of $LiOH \cdot H_2O$ and the mixture heated to 80°C. X-ray analysis shows that all of the gibbsite is converted to 3-layer $LiOH \cdot 2Al(OH)_3 \cdot nH_2O$ in about 30 minutes. The resin is neutralized with HCl. This reaction also occurs at room temperature but at a much slower rate.

Example 2

(a) Preparation of 3-Layer $LiCl \cdot 2Al(OH)_3 \cdot nH_2O$ in a Porous Substrate via Bayerite

A macroporous weak base ion-exchange resin (500 ml) in the chloride form is poured into an equal volume of saturated aqueous $AlCl_3$ solution. The slurry is stirred without heating for 40 minutes. The resin is filtered by suction until all of the excess $AlCl_3$ solution is removed from the resin and the resin is stirred into 500 ml of 30 percent $NH_3$ in $H_2O$ at room temperature. An exotherm from 25°C to 30°C is observed. The resin is stirred for a total of 20 minutes. The ammonia solution is poured off of the resin and the resin is allowed to set for 16 hours at room temperature. X-ray analysis of the resin shows that bayerite has formed in the resin. There is still a large amount of amorphous $Al(OH)_3$ present. Aluminum analysis indicates that the resin contains 0.7 mmole of Al/ml of resin at this point.

The resin is washed thoroughly so that the filtrate is clear. Even a small amount of crystalline $Al(OH)_3$ in the solution phase cannot be tolerated.

The resin and 230 ml of deionized water are stirred and heated to 45°C and 173 g of freshly prepared $NaAlO_2 \cdot xNaOH$ is added to the slurry. This mixture is reacted for 1 hour. From x-ray data it can be seen that the amorphous $Al(OH)_3$ content of the resin is decreased.

Four 216-g additions of amorphous $Al(OH)_3$ are added at 15-minute intervals. After the last addition, the resin is allowed to stand for 16 hours. X-ray analysis of the product shows only well crystallized bayerite.

(b)

The resin described above (210 ml) is neutralized with 240 milliequivalents of HCl. The resin is then heated at 110°C-115°C in 250 ml of 30 percent LiCl solution for 1.5 to 3 hours. Very crystalline 3-layer $LiCl \cdot 2Al(OH)_3 \cdot nH_2O$ is the product. No further neutralization is necessary.

Bayerite in porous resin can also be converted to 3-layer lithium aluminate by reaction with LiOH or a mixture of LiCl and LiOH.

Example 3 - Growth of Nordstrandite in a Porous Substrate

The same resin employed in Example 2 (500 ml) is poured into an equal volume of aqueous 25 percent $AlCl_3$ solution and the mixture is stirred for 30-40 minutes. The resin is then filtered to remove the excess $AlCl_3$ and stirred into 30 percent $NH_4OH$ solution. The resin is stirred for 30 minutes and washed thoroughly with $H_2O$. The resin is successively treated with $NH_4OH$ and $H_2O$ until substantially all of the $Cl^-$ is removed. The resin is washed with deionized water to remove all traces of $NH_4OH$.

The resin is then placed in a polyethylene bottle with an equal volume of 12 percent ethylenediamine and heated at 50°C for 16 hours. X-ray shows the presence of nordstrandite.

The resin is then contacted with an equal volume of deionized water and 230 g of fresh $NaAlO_2 \cdot \frac{1}{2}NaOH$ for one hour. Five 25-g additions of amorphous $Al(OH)_3$ are then added at 15-minute intervals. The resulting product is nordstrandite in the pores of the resin.

Example 4 - The Modified Method for High Loading of Crystalline Hydrous Alumina

To 3000 ml of the same resin employed in Examples 2 and 3 except that it was in the OH' form, was added water to a total of 3750 ml was stirred as 147 g of anhydrous $AlCl_3$ were added. Stirring was continued for one hour as the pH slowly rose to 5. The slurry was well washed with deionized water until the effluent was almost colorless. The washed resin was reslurried with 40 ml of 30 percent $NH_3$ and 155 ml of 50 percent NaOH to a pH of 10.5. The resin was then washed on a filter.

A sample of 197 ml of the resin so prepared was slurried in $H_2O$ with 5.22 g of $NaAlO_2 \cdot xNaOH$ ($NaAlO_2 \cdot xNaOH$ is a solution of sodium aluminate made by dissolving 1960 g of gibbsite in 2100 ml of 50 percent NaOH at 100°C). The final volume of resin was 192 ml.

The resin was transferred to a one-liter beaker and 299 g of $NaAlO_2 \cdot xNaOH$ was added plus water to a total volume of 540 ml. By means of a pump, 36 percent HCl was metered into the stirred slurry at a rate of 1 ml/minute. The temperature rose to a maximum of 40°C and it was maintained at 30°C-40°C during the course of the HCl addition. The pH decreased from 14 to 12.8. The pump was controlled by the pH, and near the end of the HCl addition, was essentially in an on-off mode as the pH fluctuated. After 164 ml of 35 percent HCl had been added the slurry was well washed to yield 230 ml of resin which contained 4.63 mmoles of Al/cc of resin. The Al was present as bayerite as determined by x-ray.

Example 5

The same resin employed in Examples 2 and 3 (200 ml) was treated at room temperature with a large excess of aqueous 25.5 percent $AlCl_3$. The resin is sucked dry on a filter funnel and dumped into 200 ml of 30 percent aqueous ammonia and stirred for 15 minutes. The resin is rinsed briefly with water and allowed to stand overnight at room temperature. It was titrated to stable 10.1 pH with 74 ml of N/1 NaOH. The resin was then washed until chloride free to give a settled volume of 166 ml and was added to water to a total volume of 260 ml. A sodium aluminate solution (4.4 g) (1960 g of gibbsite dissolved in 2100 ml of 50 percent NaOH at 100°C) was added. After one hour of stirring at room temperature an additional 70 g of sodium aluminate solution was added. After an additional 45 minutes of stirring at 30°C-35°C, the pH had risen to 13.6. During the next hour four equal additions of amorphous $Al(OH)_3$ (100 g ≡ 1 mole Al) of 9 g each were made. The pH held at 13.5-13.6. The supernatant solution was filtered and returned to the resin pot with a pH increase to 13.9. Two more 9-g additions of amorphous $Al(OH)_3$ were made during the next hour and then two more 9-g additions in the next 45 minutes. The washed resin, with a settled volume of 203 ml, showed an aluminum content of 4.5 mmoles/ml.

0103035

Claims

1. A process for growing crystalline hydrous alumina within the pores of a porous substrate, characterized by providing a seed of crystalline hydrous alumina in said pores by the in situ precipitation of a water-soluble aluminum compound, thereby forming amorphous hydrous alumina; converting the so-formed amorphous hydrous alumina to crystalline hydrous alumina by heating; and adding to the seed-bearing substrate an aqueous solution of an alkaline aluminate, thereby providing aluminum oxide values which grow additional quantities of crystalline hydrous alumina on the crystalline hydrous alumina seeds.

2. The process of Claim 1 wherein the alkaline aluminate comprises $NaAlO_2 \cdot xNaOH$ where x is a numerical value of 0.1 to 0.5.

3. The process of Claim 1 wherein the production of the additional quantities of crystalline hydrous alumina is promoted by addition of an acid which forms a soluble salt with the alkali.

4. The process of Claim 3 wherein the acid is HCl.

5. The process of Claim 1 wherein the porous substrate is selected from the group consisting of inorganic, organic, polymeric and resinous materials.

6. The process of Claim 1 wherein the porous substrate is a macroporous ion-exchange resin.

7. The process of Claim 1 and including the additional step of reacting the so-formed crystalline hydrous alumina with LiOH to form crystalline $LiOH \cdot 2Al(OH)_3 \cdot nH_2O$.

8. The process of Claim 1 and including the additional step of reacting the so-formed crystalline hydrous alumina with lithium salt, LiX, to form crystalline $LiX \cdot 2Al(OH)_3 \cdot nH_2O$ where X is the anion of the lithium salt.

European Patent Office

# EUROPEAN SEARCH REPORT

0103035

Application number

EP 82 10 8327

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| X | US-A-4 348 296 (W.C. BAUMAN et al.)<br>----- | 1-8 | C 01 D 15/00<br>C 01 F 7/00<br>B 01 J 41/08 |
| | | | TECHNICAL FIELDS SEARCHED (Int. Cl. 3) |
| | | | C 01 D 15/00<br>C 01 F 7/00<br>B 01 J 41/00<br>B 01 J 47/00 |

The present search report has been drawn up for all claims

| Place of search | Date of completion of the search | Examiner |
|---|---|---|
| BERLIN | 02-05-1983 | KESTEN W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document